# FASCICULE DE BREVET EUROPEEN

(11) **EP 3 881 013 B1**
(45) Date de publication et mention de la délivrance du brevet: **05.07.2023**
(21) Numéro de dépôt: 19829278.1
(22) Date de dépôt: 15.11.2019
(51) Int. Cl.: F25B 13/00, F25B 29/00, B60H 1/00, F25B 41/20, F25B 41/22, F25B 41/24

(54) **DISPOSITIF DE GESTION THERMIQUE INVERSIBLE D'UN VEHICULE AUTOMOBILE**
REVERSIBLE THERMISCHE MANAGEMENTVORRICHTUNG FÜR EIN KRAFTFAHRZEUG
REVERSIBLE THERMAL MANAGEMENT DEVICE FOR A MOTOR VEHICLE

(30) Priorité: 16.11.2018 FR 1860650
(43) Date de publication de la demande: 22.09.2021
(73) Titulaire: VALEO SYSTEMES THERMIQUES, 78320 Le Mesnil Saint-Denis (FR)
(72) Inventeur: LIU, Jin-Ming, 78322 LE MESNIL SAINT-DENIS CEDEX (FR); YAHIA, Mohamed, 78322 LE MESNIL SAINT-DENIS CEDEX (FR); NICOLAS, Bertrand, 78322 LE MESNIL SAINT-DENIS CEDEX (FR); AKIKI, Roland, 78322 LE MESNIL SAINT-DENIS CEDEX (FR)
(74) Mandataire: Valeo Systèmes Thermiques
(86) Numéro de dépôt international: PCT/FR2019/052715
(87) Numéro de publication internationale: WO 2020/099798

(56) Documents cités:
- EP-A1- 2 479 506
- DE-T5-112012 000 758
- US-A- 5 605 051

## Description

L'invention se rapporte au domaine des véhicules automobiles et plus particulièrement à un dispositif de gestion thermique inversible pour un véhicule automobile.

Les véhicules automobiles actuels comportent de plus en plus souvent un dispositif de gestion thermique. Généralement, dans un dispositif de gestion thermique « classique », un fluide réfrigérant circule dans un circuit de climatisation et passe successivement dans un compresseur, un premier échangeur de chaleur, appelé condenseur, placé en contact avec un flux d'air extérieur au véhicule automobile pour libérer de la chaleur, un dispositif de détente et un deuxième échangeur de chaleur, appelé évaporateur, placé en contact avec un flux d'air intérieur du véhicule automobile pour le refroidir.

Il existe également des architectures de circuit de climatisation plus complexes qui permettent d'obtenir un dispositif de gestion thermique inversible, c'est à dire qu'il peut utiliser un mode de fonctionnement pompe à chaleur dans lequel il est apte à absorber de l'énergie calorifique dans l'air extérieur au niveau du premier échangeur de chaleur, appelé alors évapo-condenseur, et la restituer dans l'habitacle notamment au moyen d'un troisième échangeur de chaleur dédié.

Cela est possible notamment en utilisant un condenseur interne dédié disposé dans le flux d'air interne et permettant de chauffer ledit flux d'air interne.

Le dispositif de gestion thermique peut également comporter un ou plusieurs échangeurs de chaleurs, généralement disposés en parallèle de l'évaporateur, afin par exemple de refroidir des éléments tels que les batteries dans un véhicule hybride ou électrique.

Le dispositif de gestion thermique comporte ainsi généralement un dispositif de détente dédié en amont de chaque échangeur de chaleur. Une telle architecture n'est pas adaptée car elle demande autant de dispositifs de détente que d'échangeurs de chaleur pouvant jouer le rôle d'évaporateur et donc elle est coûteuse.

Les documents DE112012000758 T5 et US5605051 A divulguent un dispositif de gestion thermique inversible pour un véhicule automobile. Le document D112012000758 T5 représente l'état de la technique le plus proche de la présente invention.

Un des buts de la présente invention est donc de remédier au moins partiellement aux inconvénients de l'art antérieur et de proposer un dispositif de gestion thermique amélioré et moins coûteux.

La présente invention concerne donc un dispositif de gestion thermique inversible comme défini par la revendication indépendante 1 annexée, pour un véhicule automobile, ledit dispositif de gestion thermique comportant un circuit de fluide réfrigérant dans lequel circule un fluide réfrigérant et comportant :
∘ une boucle principale comportant successivement un compresseur, un condenseur interne, un premier dispositif de détente et un évapo/condenseur externe,
∘ une première branche de dérivation reliant un premier point de raccordement disposé sur la boucle principale en amont du premier dispositif de détente, entre ledit premier dispositif de détente et le condenseur interne, à un deuxième point de raccordement disposé sur la boucle principale en amont de l'évapo/condenseur externe, entre ledit évapo/condenseur externe et le premier dispositif de détente,
∘ une deuxième branche de dérivation reliant un troisième point de raccordement disposé sur la boucle principale en aval de l'évapo/condenseur externe, entre ledit évapo/condenseur externe et le compresseur, à un quatrième point de raccordement disposé sur la boucle principale en amont du premier dispositif de détente, entre ledit premier dispositif de détente et le premier point de raccordement,
∘ une troisième branche de dérivation reliant un cinquième point de raccordement disposé sur la boucle principale en aval du premier dispositif de détente, entre ledit premier dispositif de détente et le deuxième point de raccordement, à un sixième point de raccordement disposé sur la boucle principale en amont du compresseur, entre ledit compresseur et le troisième point de raccordement, ladite troisième branche de dérivation comportant au moins un échangeur de chaleur,
∘ un dispositif de redirection du fluide réfrigérant en provenance du condenseur interne vers le premier dispositif de détente ou vers la première branche de dérivation,
∘ une vanne d'arrêt du fluide réfrigérant disposée sur la boucle principale entre le troisième et le sixième point de raccordement,
∘ une première vanne antiretour disposée sur la deuxième branche de dérivation de sorte à bloquer le fluide réfrigérant en provenance du condenseur interne,
∘ une deuxième vanne antiretour disposée sur la boucle principale entre le deuxième et le cinquième point de raccordement de sorte à bloquer le fluide réfrigérant en provenance de l'évapo/condenseur,
∘ un dispositif de redirection du fluide réfrigérant en provenance du premier dispositif de détente vers l'au moins un échangeur de chaleur de la troisième branche de dérivation ou vers l'évapo/condenseur.

Les aspects suivants décrivent des réalisations de l'invention, où ces aspects comportent des caractéristiques additionnelles de façon supplémentaire à l'intégralité des caractéristiques déjà comprises dans la revendication indépendante 1 annexée. Selon un aspect de l'invention, le dispositif de redirection du fluide réfrigérant en provenance du premier dispositif de détente comporte en plus :
∘ une première vanne d'arrêt disposée sur la boucle principale en amont de l'évapo/condenseur, entre le cinquième point de raccordement et la deuxième vanne antiretour,
∘ au moins une autre vanne d'arrêt disposée sur la troisième branche de dérivation en amont de l' au moins un échangeur de chaleur, entre le cinquième point de raccordement et l'au moins un échangeur de chaleur.

Selon un autre aspect de l'invention, la troisième branche de dérivation comporte en plus un évaporateur interne et en ce que le dispositif de gestion thermique inversible comporte une quatrième branche de dérivation comportant un refroidisseur, ladite quatrième branche de dérivation reliant un septième point de raccordement disposé sur la troisième branche de dérivation en aval du cinquième point de raccordement, entre ledit cinquième point de raccordement et l'évaporateur interne, à un huitième point de raccordement disposé sur la troisième branche de dérivation en amont du sixième point de raccordement, entre ledit sixième point de raccordement et l'évaporateur interne, le dispositif de redirection du fluide réfrigérant en provenance du premier dispositif de détente étant configuré pour rediriger le fluide vers l'évapo/condenseur ou vers l'évaporateur interne et/ou le refroidisseur.

Selon un autre aspect de l'invention, le dispositif de redirection du fluide réfrigérant en provenance du premier dispositif de détente comporte en plus
∘ une deuxième vanne d'arrêt disposée sur la troisième branche de dérivation en amont de l'évaporateur interne, entre ledit évaporateur interne et le septième point de raccordement, et
∘ une troisième vanne d'arrêt disposée sur la quatrième branche de dérivation en amont du refroidisseur, entre ledit refroidisseur et le septième point de raccordement.

Selon un autre aspect de l'invention, le dispositif de gestion thermique inversible comporte en plus un dispositif de chauffage, ventilation et climatisation à l'intérieur duquel est destiné à circuler un flux d'air interne en direction de l'habitacle, l'évaporateur interne et le condenseur interne étant disposé dans ledit dispositif de chauffage, ventilation et climatisation, ledit évaporateur interne étant disposé en amont du condenseur interne dans le sens de circulation du flux d'air interne.

Selon un autre aspect de l'invention, le dispositif de chauffage, ventilation et climatisation comporte en plus un volet disposé de sorte à bloquer le flux d'air interne pour qu'il ne traverse pas le condenseur interne.

Selon un autre aspect de l'invention, le dispositif de gestion thermique inversible comporte en plus un échangeur de chaleur interne, ledit échangeur de chaleur interne étant disposé d'une part sur la deuxième branche de dérivation en aval de la première vanne antiretour, entre ladite première vanne antiretour et le quatrième point de raccordement et d'autre part sur la boucle principale en amont du compresseur, entre ledit compresseur et le sixième point de raccordement.

Selon un autre aspect de l'invention, le dispositif de redirection du fluide réfrigérant en provenance du premier dispositif de détente est contrôlé via des signaux à modulation de largeur d'impulsion.

Selon un autre aspect de l'invention, le dispositif de gestion thermique inversible comporte en plus un deuxième dispositif de détente disposé sur la troisième branche de dérivation en aval de l'au moins un échangeur de chaleur.

Selon un autre aspect de l'invention, le dispositif de gestion thermique inversible comporte en outre :
∘ un dispositif de blocage du fluide réfrigérant disposé sur la troisième branche de dérivation en aval de l'au moins un échangeur de chaleur,
∘ une cinquième branche de dérivation reliant un neuvième point de raccordement disposé sur la troisième branche de dérivation entre le dispositif de blocage et l'au moins un échangeur de chaleur, à un dixième point de raccordement disposé sur la deuxième branche de raccordement entre ladite première vanne antiretour et le troisième point de raccordement, ladite cinquième branche de dérivation comportant une troisième vanne antiretour de sorte à bloquer le fluide réfrigérant en provenance du dixième point de raccordement,
∘ une quatrième vanne antiretour disposée sur la deuxième branche de dérivation entre le troisième et le dixième point de raccordement, de sorte à bloquer le fluide réfrigérant en provenance du dixième point de raccordement,
∘ une sixième branche de dérivation reliant un onzième point de raccordement disposé sur la deuxième branche de dérivation entre le dixième point de raccordement et la première vanne antiretour, à un douzième point de raccordement disposé sur la boucle principale en aval de la deuxième vanne antiretour, entre ladite deuxième vanne antiretour et le deuxième point de raccordement, ladite sixième branche de dérivation comportant une cinquième vanne antiretour de sorte à bloquer le fluide réfrigérant en provenance du douzième point de raccordement,
∘ un troisième dispositif de détente disposé sur la deuxième branche de dérivation entre le dixième et le onzième point de raccordement.

D'autres caractéristiques et avantages de l'invention apparaîtront plus clairement à la lecture de la description suivante, donnée à titre d'exemple illustratif et non limitatif, et des dessins annexés parmi lesquels :
- la figure 1 montre une représentation schématique d'un dispositif de gestion thermique selon un premier mode de réalisation,
- les figures 2 à 7 montrent des représentations schématiques du dispositif de gestion thermique de la figure 1 selon différents modes de fonctionnement,
- la figure 8 montre une représentation schématique d'un dispositif de gestion thermique selon un deuxième mode de réalisation
- la figure 9 montre une représentation schématique d'un dispositif de gestion thermique selon un troisième mode de réalisation,
- la figure 10 montre une représentation schématique du dispositif de gestion thermique de la figure 9 selon un mode de fonctionnement particulier.

Sur les différentes figures, les éléments identiques portent les mêmes numéros de référence.

Les réalisations suivantes sont des exemples. Bien que la description se réfère à un ou plusieurs modes de réalisation, ceci ne signifie pas nécessairement que chaque référence concerne le même mode de réalisation, ou que les caractéristiques s'appliquent seulement à un seul mode de réalisation. De simples caractéristiques de différents modes de réalisation peuvent également être combinées et/ou interchangées pour fournir d'autres réalisations.

Dans la présente description, on peut indexer certains éléments ou paramètres, comme par exemple premier élément ou deuxième élément ainsi que premier paramètre et second paramètre ou encore premier critère et deuxième critère, etc. Dans ce cas, il s'agit d'un simple indexage pour différencier et dénommer des éléments ou paramètres ou critères proches, mais non identiques. Cette indexation n'implique pas une priorité d'un élément, paramètre ou critère par rapport à un autre et on peut aisément interchanger de telles dénominations sans sortir du cadre de la présente description.

Dans la présente description, on entend par « placé en amont » qu'un élément est placé avant un autre par rapport au sens de circulation d'un fluide. A contrario, on entend par « placé en aval » qu'un élément est placé après un autre par rapport au sens de circulation du fluide.

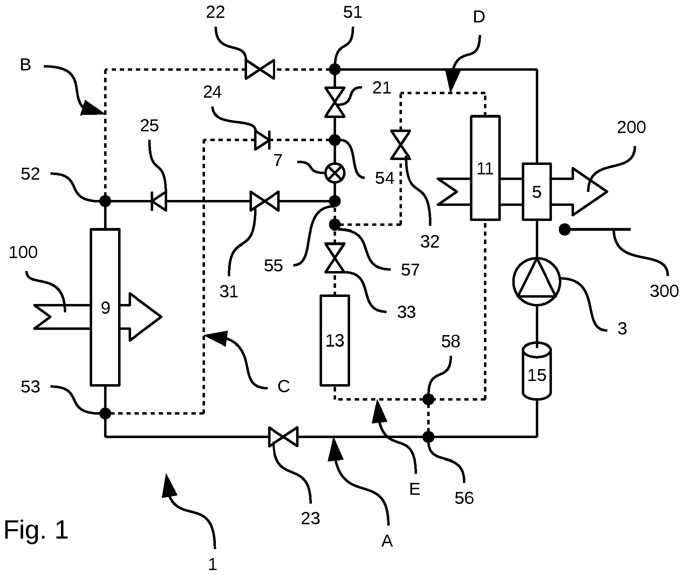

La figure 1 montre un dispositif de gestion thermique inversible 1 pour un véhicule automobile. Ce dispositif de gestion thermique 1 comporte un circuit de fluide réfrigérant dans lequel circule un fluide réfrigérant. Sur la représentation de la figure 1 ainsi que sur les figures suivantes, le circuit de fluide réfrigérant est notamment divisé en une boucle principale A sur laquelle sont connectées des branches de dérivation B, C, D, E et F. Le choix de cette boucle principale A est un choix arbitraire utilisé afin de faciliter la compréhension des différents branchements et de la position des différents éléments les uns par rapport aux autres. La boucle principale A est représentée en trait plein et les branches de dérivation B, C, D, E et F en trait pointillé.

La boucle principale A comporte successivement un compresseur 3, un condenseur interne 5, un premier dispositif de détente 7 et un évapo/condenseur externe 9. On entend ici par « interne » que l'élément est destiné à être traversé par un flux d'air interne 200 qui est lui même destiné à rejoindre l'habitacle du véhicule automobile. Par « externe », on entend que l'élément est destiné à être traversé par un flux d'air externe 100 en provenance de l'extérieur du véhicule automobile.

Le fluide réfrigérant est notamment destiné à circuler dans le compresseur 3, le condenseur interne 5, le premier dispositif de détente 7 et l'évapo/condenseur externe 9 dans un mode de fonctionnement dit de pompe à chaleur qui sera détaillé plus loin dans la description. C'est ce sens de circulation du fluide réfrigérant qui est pris en considération arbitrairement pour faciliter la compréhension et définir les termes « amont » et « aval ».

En amont du compresseur 3, la boucle principale A peut comporter un séparateur de phase 15.

Le dispositif de gestion thermique 1 comporte également une première branche de dérivation B reliant un premier point de raccordement 51 à un deuxième point de raccordement 52. Le premier point de raccordement est disposé sur la boucle principale A en amont du premier dispositif de détente 7, entre ledit premier dispositif de détente 7 et le condenseur interne 5. Le deuxième point de raccordement 52 est quant à lui disposé sur la boucle principale A en amont de l'évapo/condenseur externe 9, entre ledit évapo/condenseur externe 9 et le premier dispositif de détente 7.

Le dispositif de gestion thermique 1 comporte aussi une deuxième branche de dérivation C reliant un troisième point de raccordement 53 à un quatrième point de raccordement 54. Le troisième point de raccordement 53 est disposé sur la boucle principale A en aval de l'évapo/condenseur externe 9, entre ledit évapo/condenseur externe 9 et le compresseur 3. Le quatrième point de raccordement 54 est quant à lui disposé sur la boucle principale A en amont du premier dispositif de détente 7, entre ledit premier dispositif de détente 7 et le premier point de raccordement 51.

Le dispositif de gestion thermique 1 comporte enfin une troisième branche de dérivation D reliant un cinquième point de raccordement 55 à un sixième point de raccordement 56. Le cinquième point de raccordement 55 est disposé sur la boucle principale A en aval du premier dispositif de détente 7, entre ledit premier dispositif de détente 7 et le deuxième point de raccordement 52. Le sixième point de raccordement 56 est quant à lui disposé sur la boucle principale A en amont du compresseur 3, entre ledit compresseur 3 et le troisième point de raccordement 53. Cette troisième branche de dérivation D comporte notamment au moins un échangeur de chaleur 11-13.

Le dispositif de gestion thermique 1 comporte également un dispositif de redirection du fluide réfrigérant en provenance du condenseur interne 5 vers le premier dispositif de détente 7 ou vers la première branche de dérivation B. Ce dispositif de redirection permet de choisir si le fluide réfrigérant en provenance du condenseur interne 5 est redirigé vers le premier dispositif de détente 7 ou vers la première branche de dérivation B selon le mode de fonctionnement choisi.

Ce dispositif de redirection peut notamment être composé de deux vannes d'arrêt 21-22. Une première vanne d'arrêt 21 est disposée sur la boucle principale A en amont du premier dispositif de détente 7, entre le premier 51 et le quatrième 54 point de raccordement. Une deuxième vanne d'arrêt 22 est disposée sur la première branche de dérivation B. En fonction de l'ouverture ou de la fermeture de ces vannes d'arrêt 21-22 il est ainsi possible de contrôler la direction du fluide réfrigérant.

Le dispositif de gestion thermique 1 comporte également divers éléments de contrôle de la circulation du fluide réfrigérant permettant le fonctionnement selon différents modes de fonctionnement.

La deuxième branche de dérivation C comporte ainsi une première vanne antiretour 24 disposée de sorte à bloquer le fluide réfrigérant en provenance du condenseur interne 5, c'est-à-dire du quatrième point de raccordement 54.

La boucle principale A comporte une vanne d'arrêt 23 du fluide réfrigérant disposée entre le troisième 53 et le sixième 56 point de raccordement. La boucle principale A comporte également une deuxième vanne antiretour 25 disposée entre le deuxième 52 et le cinquième 55 point de raccordement de sorte à bloquer le fluide réfrigérant en provenance de l'évapo/condenseur 9, c'est-à-dire du deuxième point de raccordement 52.

Le dispositif de gestion thermique 1 comporte en outre un dispositif de redirection du fluide réfrigérant en provenance du premier dispositif de détente 7 vers l'au moins un échangeur de chaleur 11-13 de la troisième branche de dérivation D ou vers l'évapo/condenseur 9.

Ce dispositif de redirection du fluide réfrigérant en provenance du premier dispositif de détente 7 permet ainsi de rediriger le fluide réfrigérant ayant traversé le premier dispositif de détente.

Le dispositif de redirection du fluide réfrigérant en provenance du premier dispositif de détente 7 peut notamment comporter :
∘ une première vanne d'arrêt 31 disposée sur la boucle principale A en amont de l'évapo/condenseur 9, entre le cinquième point de raccordement 55 et la deuxième vanne antiretour 25,
∘ au moins une autre vanne d'arrêt 32-33 disposée sur la troisième branche de dérivation D en amont de l'au moins un échangeur de chaleur 11-13, entre le cinquième point de raccordement 55 et l'au moins un échangeur de chaleur 11-13.

Dans l'exemple illustré à la figure 1, le dispositif de gestion thermique inversible 1 comporte deux échangeurs de chaleurs 11-13 sur la troisième branche de dérivation D. plus précisément, ces deux échangeurs de chaleurs 11-13 sont connectés en parallèle l'un de l'autre. Ainsi, la troisième branche de dérivation D comporte un évaporateur interne 11 et un refroidisseur 13. Ce refroidisseur 13 est disposé sur une quatrième branche de dérivation E reliant un septième point de raccordement 57 à un huitième point de raccordement 58. Le septième point de raccordement est disposé sur la troisième branche de dérivation D en aval du cinquième point de raccordement 55, entre ledit cinquième point de raccordement 55 et l'évaporateur interne 11. Le huitième point de raccordement 58 est quant à lui disposé sur la troisième branche de dérivation D en amont du sixième point de raccordement 56, entre ledit sixième point de raccordement 56 et l'évaporateur interne 11.

Dans cet exemple, le dispositif de redirection du fluide réfrigérant en provenance du premier dispositif de détente 7 est configuré pour rediriger le fluide vers l'évapo/condenseur 9 ou vers l'évaporateur interne 11 et/ou le refroidisseur 13. Pour cela, le dispositif de redirection du fluide réfrigérant en provenance du premier dispositif de détente 7 peut notamment comporter :
∘ une deuxième vanne d'arrêt 32 disposée sur la troisième branche de dérivation D en amont de l'évaporateur interne 11, entre ledit évaporateur interne 11 et le septième point de raccordement 57, et
∘ une troisième vanne d'arrêt 33 disposée sur la quatrième branche de dérivation (E) en amont du refroidisseur 13, entre ledit refroidisseur 13 et le septième point de raccordement 57.

Il est à noter que l'invention ne se limite pas à un exemple avec un ou deux échangeurs de chaleur 11-13 et qu'il est possible d'avoir un plus grand nombre d'échangeurs de chaleur 11-13 sur la troisième branche de dérivation D. Le dispositif de redirection du fluide réfrigérant en provenance du premier dispositif de détente 7 peut être configuré pour contrôler la distribution du fluide réfrigérant pour chacun de ces échangeurs de chaleur 11-13.

L'évaporateur interne 11 peut être plus particulièrement disposé dans le flux d'air interne 200 à destination de l'habitacle afin de refroidir ce dernier.

Le refroidisseur 13 peut quant à lui être par exemple un refroidisseur destiné à refroidir des éléments tels que les batteries d'un véhicule automobile électrique ou hybride. Le refroidisseur 13 peut encore être par exemple un autre évaporateur placé dans un flux d'air interne 200 par exemple dans le cas d'une climatisation à plusieurs zones.

Le dispositif de gestion thermique inversible 1 peut également comporter un dispositif de chauffage, ventilation et climatisation à l'intérieur duquel est destiné à circuler un flux d'air interne 200 en direction de l'habitacle. Au sein de ce dispositif de chauffage, ventilation et climatisation, l'évaporateur interne 11 et le condenseur interne 5 sont disposés de sorte à être traversé par le flux d'air interne 200. L'évaporateur interne 11 est plus précisément disposé en amont du condenseur interne 5 dans le sens de circulation du flux d'air interne 200.

Le dispositif de chauffage, ventilation et climatisation peut également comporter un volet 300 disposé de sorte à bloquer le flux d'air interne 200 pour qu'il ne traverse pas le condenseur interne 5. Ce volet 300 permet le fonctionnement du dispositif de gestion thermique inversible 1 selon différents modes de fonctionnement comme décrit plus en détail plus loin dans la présente description.

Le dispositif de redirection du fluide réfrigérant en provenance du premier dispositif de détente 7 est contrôlé via des signaux à modulation de largeur d'impulsion. Ainsi, dans l'exemple de la figure 1 avec un évapo/condenseur 9, un évaporateur 11 et un refroidisseur 13 et avec un dispositif de redirection du fluide réfrigérant en provenance du premier dispositif de détente 7 comportant une première 31, une deuxième 32 et une troisième 33 vanne d'arrêt, la somme des signaux à modulation de largeur d'impulsion contrôlant les vannes d'arrêt 31-32-33 à un instant T est de 100 % de sorte qu'il y a toujours au moins une vanne d'arrêt 31-32-33 ouverte. La vanne d'arrêt 31-32-33 correspondant à l'alimentation en fluide réfrigérant de l'échangeur de chaleur 9, 11 ou 13 qui est utilisé dans le mode de fonctionnement sélectionné sera ainsi ouverte.

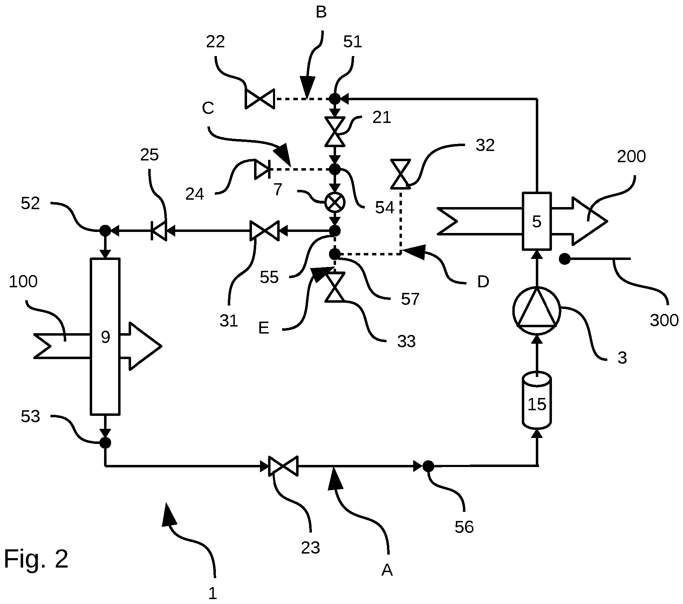

Les figures 2 à 7 montrent le dispositif de gestion thermique inversible 1 selon différents modes de fonctionnement. Sur ces figures 2 à 7, seuls les éléments actifs sont représentés. Le sens de circulation du fluide réfrigérant est représenté par des flèches.

### 1) premier mode pompe à chaleur :

La figure 2 montre le dispositif de gestion thermique inversible 1 selon un premier mode de fonctionnement dit pompe à chaleur.

Dans ce premier mode pompe à chaleur, le fluide réfrigérant passe tout d'abord par le compresseur 3 au niveau duquel il subit une augmentation de pression. Le fluide réfrigérant passe ensuite dans le condenseur interne 5 qui est traversé par le flux d'air interne 200. Pour cela le volet 300 est ouvert. Le fluide réfrigérant cède de l'énergie calorifique au flux d'air interne 200 et passe ensuite dans le premier dispositif de détente 7 au niveau duquel il subit une perte de pression. Le fluide réfrigérant passe ensuite dans l'évapo/condenseur 9 au niveau duquel il récupère de l'énergie calorifique dans le flux d'air externe 100. Le fluide réfrigérant retourne ensuite dans le compresseur 3.

Dans ce premier mode pompe à chaleur, le fluide réfrigérant circule uniquement dans la boucle principale A.

Pour que ce trajet soit possible, le dispositif de redirection du fluide réfrigérant en provenance du condenseur interne 5 redirige le fluide réfrigérant vers le premier dispositif de détente 7. Pour cela, sa première vanne d'arrêt 21 est ouverte et sa deuxième vanne d'arrêt 22 est fermée.

Le dispositif de redirection du fluide réfrigérant en provenance du premier dispositif de détente 7 redirige quant à lui le fluide réfrigérant vers l'évapo/condenseur 9. Pour cela, sa première vanne d'arrêt 31 est ouverte et ses deuxième 32 et troisième 33 vannes d'arrêt sont fermées.

La vanne d'arrêt 23 est quant à elle ouverte.

Ce premier mode pompe à chaleur permet de réchauffer le flux d'air interne 200 et ainsi de chauffer l'habitacle du véhicule automobile.

### 2) premier mode de refroidissement :

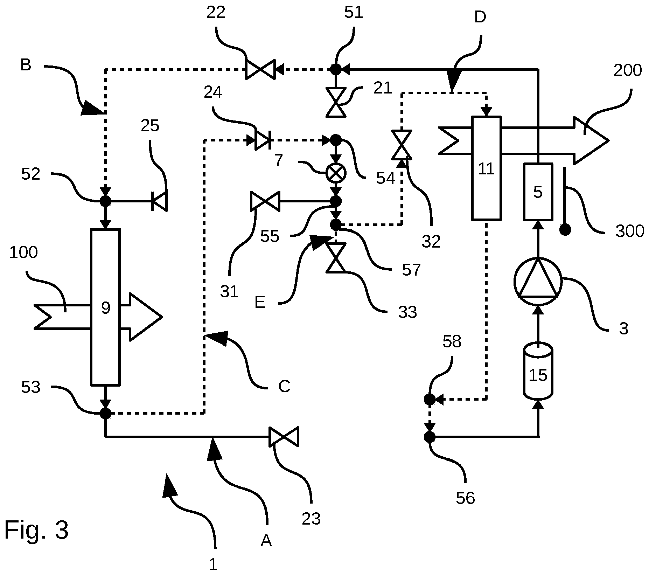

La figure 3 montre le dispositif de gestion thermique inversible 1 selon un premier mode de fonctionnement dit de refroidissement.

Dans ce mode de refroidissement, le fluide réfrigérant passe tout d'abord par le compresseur 3 au niveau duquel il subit une augmentation de pression. Le fluide réfrigérant passe ensuite dans le condenseur interne 5 qui n'est pas traversé par le flux d'air interne 200. Pour cela le volet 300 est fermé. Le fluide réfrigérant passe ensuite dans la première branche de dérivation B et rejoint l'évapo/condenseur 9. Le fluide réfrigérant cède de l'énergie calorifique au flux d'air externe 100 et passe ensuite dans le premier dispositif de détente 7 via la deuxième branche de dérivation C. Au niveau du premier dispositif de détente 7, le fluide réfrigérant subit une perte de pression. Le fluide réfrigérant passe ensuite dans la troisième branche de dérivation D et passe dans l'évaporateur 11 au niveau duquel il récupère de l'énergie calorifique dans le flux d'air externe 200. Le fluide réfrigérant retourne ensuite dans le compresseur 3.

Pour que ce trajet soit possible, le dispositif de redirection du fluide réfrigérant en provenance du condenseur interne 5 redirige le fluide réfrigérant vers la première branche de dérivation C. Pour cela, sa première vanne d'arrêt 21 est fermée et sa deuxième vanne d'arrêt 22 est ouverte.

Dans ce premier mode de refroidissement, le fluide réfrigérant en sortie du premier dispositif de détente 7 passe uniquement dans l'évaporateur 11. Le dispositif de redirection du fluide réfrigérant en provenance du premier dispositif de détente 7 redirige le fluide réfrigérant uniquement vers l'évaporateur 11. Pour cela, sa première vanne d'arrêt 31 est fermée. Sa deuxième vanne d'arrêt 32 est ouverte et sa troisième vanne d'arrêt 33 est fermée.

La vanne d'arrêt 23 est quant à elle fermée.

Dans ce premier mode de refroidissement, le dispositif de gestion thermique inversible 1 est utilisé pour refroidir exclusivement le flux d'air interne 200 et donc l'habitacle.

### 3) deuxième mode de refroidissement :

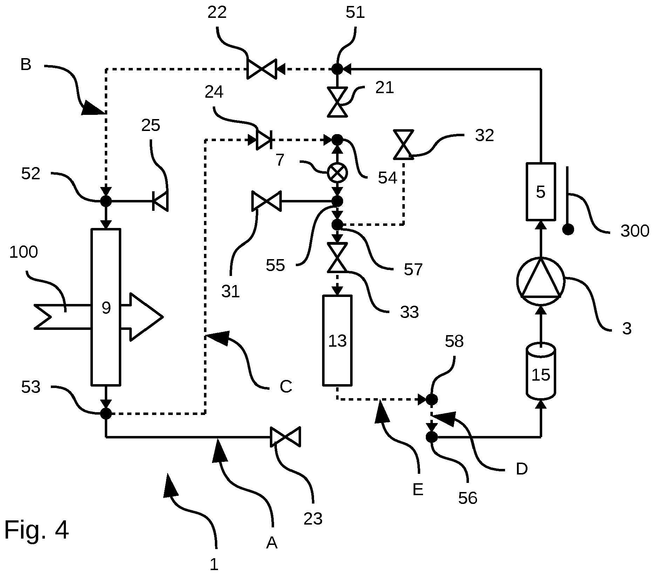

La figure 4 montre le dispositif de gestion thermique inversible 1 selon un deuxième mode de fonctionnement dit de refroidissement.

Ce deuxième mode de refroidissement est identique au premier mode de refroidissement à la différence qu'en sortie du premier dispositif de détente 7 le fluide réfrigérant passe dans la troisième branche de dérivation D et dans la quatrième branche de dérivation E pour rejoindre le refroidisseur 13 au lieu de l'évaporateur 11. Au niveau du refroidisseur 13, le fluide réfrigérant récupère de l'énergie calorifique. Le fluide réfrigérant retourne ensuite dans le compresseur 3.

Dans ce deuxième mode de refroidissement, le fluide réfrigérant en sortie du premier dispositif de détente 7 passe uniquement dans le refroidisseur 13. Le dispositif de redirection du fluide réfrigérant en provenance du premier dispositif de détente 7 redirige le fluide réfrigérant uniquement vers le refroidisseur 13. Pour cela, sa première vanne d'arrêt 31 est fermée. Sa deuxième vanne d'arrêt 32 est fermée et sa troisième vanne d'arrêt 33 est ouverte.

La vanne d'arrêt 23 est quant à elle fermée.

Ce deuxième mode de refroidissement, le dispositif de gestion thermique inversible 1 est utilisé pour refroidir exclusivement l'élément associé au refroidisseur 13, par exemple les batteries d'un véhicule automobile hybride ou électrique.

### 4) mode de refroidissement mixte :

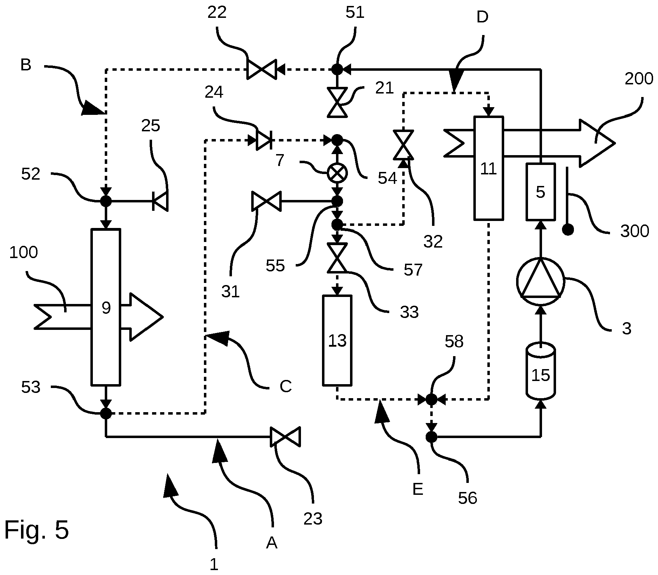

La figure 5 montre le dispositif de gestion thermique inversible 1 selon un mode de fonctionnement dit de refroidissement mixte.

Ce mode de refroidissement mixte est identique aux premier et deuxième modes de refroidissement à la différence qu'en sortie du premier dispositif de détente 7 le fluide réfrigérant passe dans la troisième branche de dérivation D et dans la quatrième branche de dérivation E pour traverser à la fois le refroidisseur 13 et l'évaporateur 11. Au niveau du refroidisseur 13 et de l'évaporateur 11, le fluide réfrigérant récupère de l'énergie calorifique. Le fluide réfrigérant retourne ensuite dans le compresseur 3.

Dans ce mode de refroidissement mixte, le fluide réfrigérant en sortie du premier dispositif de détente 7 passe à la fois dans le refroidisseur 13 et dans l'évaporateur 11. Le dispositif de redirection du fluide réfrigérant en provenance du premier dispositif de détente 7 redirige le fluide réfrigérant simultanément vers le refroidisseur 13 et l'évaporateur 11. Pour cela, sa première vanne d'arrêt 31 est fermée. Sa deuxième 32 et troisième 33 vanne d'arrêt sont ouvertes.

La vanne d'arrêt 23 est quant à elle fermée.

Dans ce mode de refroidissement mixte, le dispositif de gestion thermique inversible 1 est utilisé pour refroidir à la fois le flux d'air interne 200 et l'élément associé au refroidisseur 13, par exemple les batteries d'un véhicule automobile hybride ou électrique.

### 5) mode de déshumidification :

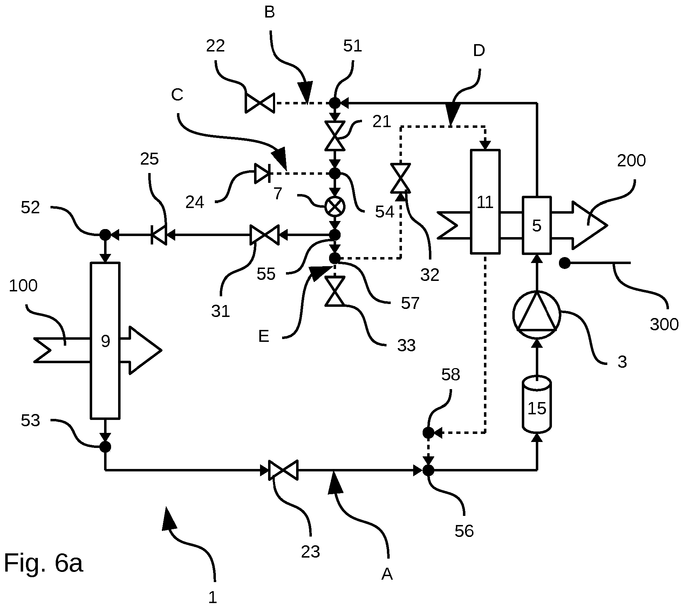

La figure 6a montre le dispositif de gestion thermique inversible 1 selon un mode de fonctionnement dit de déshumidification.

Dans ce mode de déshumidification, le fluide réfrigérant passe tout d'abord par le compresseur 3 au niveau duquel il subit une augmentation de pression. Le fluide réfrigérant passe ensuite dans le condenseur interne 5 qui est traversé par le flux d'air interne 200. Pour cela le volet 300 est ouvert. Le fluide réfrigérant cède de l'énergie calorifique au flux d'air interne 200 et passe ensuite dans le premier dispositif de détente 7 au niveau duquel il subit une perte de pression.

Une première partie du fluide réfrigérant passe ensuite dans l'évapo/condenseur 9 au niveau duquel il récupère de l'énergie calorifique dans le flux d'air externe 100.

Une deuxième partie du fluide réfrigérant passe dans la troisième branche de dérivation D et passe dans l'évaporateur 11 au niveau duquel il récupère de l'énergie calorifique dans le flux d'air externe 200.

Le fluide réfrigérant retourne ensuite dans le compresseur 3.

Pour que ce trajet soit possible, le dispositif de redirection du fluide réfrigérant en provenance du condenseur interne 5 redirige le fluide réfrigérant vers le premier dispositif de détente 7. Pour cela, sa première vanne d'arrêt 21 est ouverte et sa deuxième vanne d'arrêt 22 est fermée.

Le dispositif de redirection du fluide réfrigérant en provenance du premier dispositif de détente 7 redirige quant à lui le fluide réfrigérant vers l'évapo/condenseur 9 et vers l'évaporateur 11. Pour cela, sa première 31 et sa deuxième 32 vanne d'arrêt 31 sont ouvertes et sa troisième vanne d'arrêt 33 est fermée.

La vanne d'arrêt 23 est quant à elle ouverte.

Ce mode de déshumidification permet de réchauffer le flux d'air interne 200 et ainsi de chauffer l'habitacle du véhicule automobile. La déshumidification du flux d'air interne 200 est réalisée par le fait qu'il subit un refroidissement avant d'être réchauffé. Ce refroidissement provoque une condensation de l'humidité que contient le flux d'air interne.

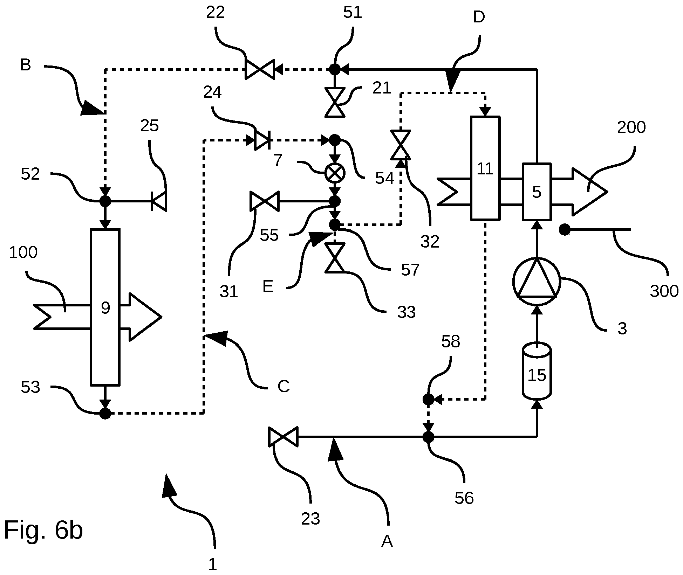

Dans ce mode de déshumidification, le fluide réfrigérant circule en parallèle dans l'évapo/condenseur 9 et l'évaporateur 11. Il est cependant tout à fait possible d'imaginer un mode de déshumidification alternatif, illustré à la figure 6b, dans lequel l'évapo/condenseur 9 et l'évaporateur 11 sont en série.

Pour ce mode de déshumidification alternatif, la première branche de dérivation B comporte un dispositif de détente. Ce dispositif de détente peut être un dispositif de détente dédié ou alors il peut remplacer la deuxième vanne d'arrêt 22 et comporter une fonction d'arrêt.

Dans ce mode de déshumidification alternatif, le fluide réfrigérant en sortie du condenseur interne 5 passe par la première branche de dérivation B. Pour cela, la première vanne d'arrêt 21 est fermée. Le fluide réfrigérant subit une première perte de pression au niveau du dispositif de détente de la première branche de dérivation B.

Le fluide réfrigérant traverse ensuite l'évapo/condeneur 9 au niveau duquel il récupère de l'énergie calorifique dans le flux d'air externe 100. Le fluide réfrigérant passe ensuite par la deuxième branche de dérivation C. Pour cela, la vanne d'arrêt 23 est fermée.

Le fluide réfrigérant traverse le premier dispositif de détente 7 au niveau duquel il subit une deuxième perte de pression. Le dispositif de redirection du fluide réfrigérant en provenance du premier dispositif de détente 7 redirige quant à lui le fluide réfrigérant vers l'évaporateur 11. Pour cela, sa première 31 et sa troisième vanne d'arrêt 33 sont fermées et sa deuxième vanne d'arrêt 32 est ouverte. Au niveau de l'évaporateur 11, le fluide réfrigérant récupère de l'énergie calorifique dans le flux d'air externe 200. Le fluide réfrigérant retourne ensuite dans le compresseur 3.

### 6) mode de récupération de chaleur :

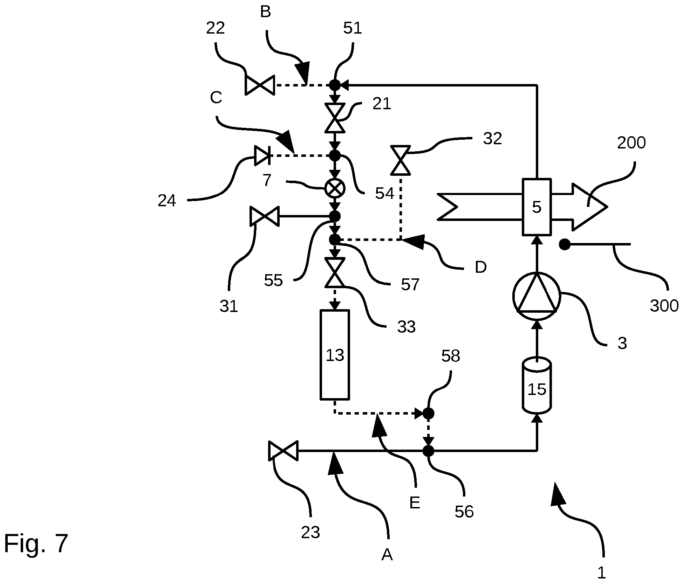

La figure 7 montre le dispositif de gestion thermique inversible 1 selon un mode de fonctionnement dit de récupération de chaleur.

Dans ce mode de récupération de chaleur, le fluide réfrigérant passe tout d'abord par le compresseur 3 au niveau duquel il subit une augmentation de pression. Le fluide réfrigérant passe ensuite dans le condenseur interne 5 qui est traversé par le flux d'air interne 200. Pour cela le volet 300 est ouvert. Le fluide réfrigérant cède de l'énergie calorifique au flux d'air interne 200 et passe ensuite dans le premier dispositif de détente 7 au niveau duquel il subit une perte de pression. Le fluide réfrigérant passe dans la troisième branche de dérivation D et dans la quatrième branche de dérivation E passe dans le refroidisseur 13 au niveau duquel il récupère de l'énergie calorifique.

Le fluide réfrigérant retourne ensuite dans le compresseur 3.

Pour que ce trajet soit possible, le dispositif de redirection du fluide réfrigérant en provenance du condenseur interne 5 redirige le fluide réfrigérant vers le premier dispositif de détente 7. Pour cela, sa première vanne d'arrêt 21 est ouverte et sa deuxième vanne d'arrêt 22 est fermée.

Le fluide réfrigérant en sortie du premier dispositif de détente 7 passe uniquement dans le refroidisseur 13. Le dispositif de redirection du fluide réfrigérant en provenance du premier dispositif de détente 7 redirige le fluide réfrigérant uniquement vers le refroidisseur 13. Pour cela, sa première vanne d'arrêt 31 est fermée. Sa deuxième vanne d'arrêt 32 est fermée et sa troisième vanne d'arrêt 33 est ouverte.

La vanne d'arrêt 23 est quant à elle fermée.

Ce mode de récupération de chaleur permet de récupérer de l'énergie calorifique au niveau de l'élément associé au refroidisseur 13, par exemple les batteries d'un véhicule automobile hybride ou électrique, afin de réchauffer le flux d'air interne 200.

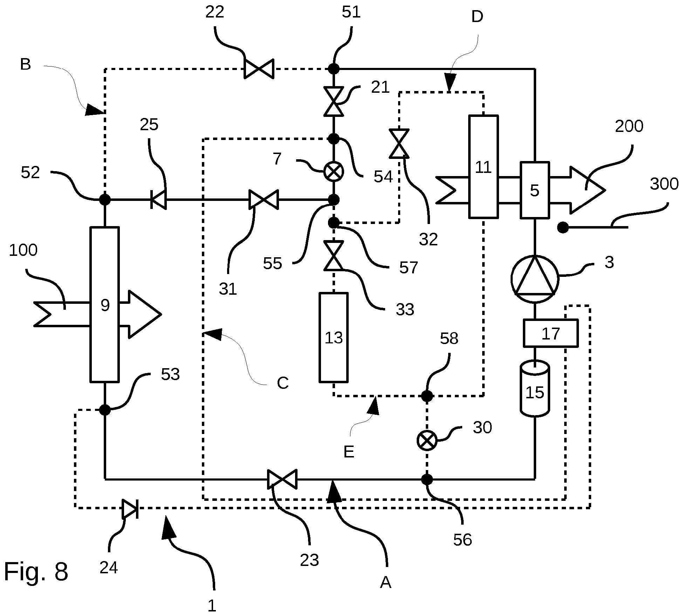

Dans un mode de réalisation alternatif illustré à la figure 8, le dispositif de gestion thermique inversible 1 peut comporter un échangeur de chaleur interne 17. Cet échangeur de chaleur interne 17 est disposé d'une part sur la deuxième branche de dérivation C en aval de la première vanne antiretour 24, entre ladite première vanne antiretour 24 et le quatrième point de raccordement 54 et d'autre part sur la boucle principale A en amont du compresseur 3, entre ledit compresseur 3 et le sixième point de raccordement 56. Cet échangeur de chaleur interne 17 permet ainsi les échanges de chaleur entre le fluide réfrigérant en sortie de l'évapo/condenseur 9 et le fluide réfrigérant en sortie de l'au moins un échangeur de chaleur 11-13. Cet échange de chaleur permet notamment d'améliorer le coefficient de performance du dispositif de gestion thermique inversible 1 dans certains modes de fonctionnement.

Comme illustré sur la figure 8, le dispositif de gestion thermique inversible 1 peut également comporter un deuxième dispositif de détente 30 disposé sur la troisième branche de dérivation D en aval de l'au moins un échangeur de chaleur 11-13. Ce deuxième dispositif de détente 30, par exemple un orifice tube avec une fonction d'arrêt, permet de faire subir une perte de pression au fluide réfrigérant en sortie de l'au moins un échangeur de chaleur 11-13 avant son retour dans la boucle principale A. Ce deuxième dispositif de détente 30 peut notamment être disposé entre le huitième 58 et le sixième 56 point de raccordement. Ce deuxième dispositif de détente 30 est particulièrement utile pour ré-équilibrer la pression du fluide réfrigérant dans le cas où la pression du fluide réfrigérant en sortie de l'évapo/condenseur 9 est différente de celle en sortie de l'au moins un échangeur de chaleur 11-13, plus précisément de l'évaporateur 11 dans le mode de déshumidification.

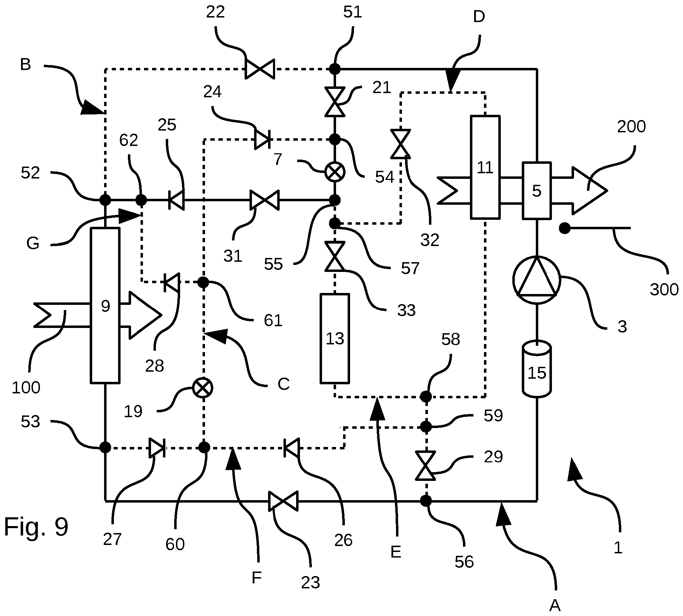

Selon un autre mode de réalisation illustré à la figure 9, le dispositif de gestion thermique inversible 1 peut comporter en outre un dispositif de blocage 29 du fluide réfrigérant disposé sur la troisième branche de dérivation D en aval de l'au moins un échangeur de chaleur 11-13. Ce dispositif de blocage 29 peut être par exemple le deuxième dispositif de détente 30 si ce dernier comporte une fonction d'arrêt ou alors il peut être simplement un vanne d'arrêt dédiée.

Dans cet autre mode de réalisation, le dispositif de gestion thermique inversible 1 comporte également une cinquième branche de dérivation F reliant un neuvième point de raccordement 59 et un dixième point de raccordement 60. Le neuvième point de raccordement 59 est disposé sur la troisième branche de dérivation D entre le dispositif de blocage 29 et l'au moins un échangeur de chaleur 11-13. Le dixième point de raccordement 60 est quant à lui disposé sur la deuxième branche de raccordement C entre ladite première vanne antiretour 24 et le troisième point de raccordement 53. Cette cinquième branche de dérivation F comporte également une troisième vanne antiretour 26 de sorte à bloquer le fluide réfrigérant en provenance du dixième point de raccordement 60.

Le dispositif de gestion thermique inversible 1 comporte en outre une quatrième vanne antiretour 27 disposée sur la deuxième branche de dérivation C entre le troisième 53 et le dixième 60 point de raccordement. Cette quatrième vanne antiretour 27 est positionnée de sorte à bloquer le fluide réfrigérant en provenance du dixième point de raccordement 60.

De plus, le dispositif de gestion thermique inversible 1 comporte une sixième branche de dérivation G reliant un onzième point de raccordement 61 à un douzième point de raccordement 62. Ce onzième point de raccordement 61 est disposé sur la deuxième branche de dérivation C entre le dixième point de raccordement 60 et la première vanne antiretour 24. Le douzième point de raccordement 62 est quant à lui disposé sur la boucle principale A en aval de la deuxième vanne antiretour 25, entre ladite deuxième vanne antiretour 25 et le deuxième point de raccordement 52. Cette sixième branche de dérivation G comporte une cinquième vanne antiretour 28 positionnée de sorte à bloquer le fluide réfrigérant en provenance du douzième point de raccordement 62.

Le dispositif de gestion thermique inversible 1 comporte enfin un troisième dispositif de détente 19 disposé sur la deuxième branche de dérivation C entre le dixième 60 et le onzième 61 point de raccordement.

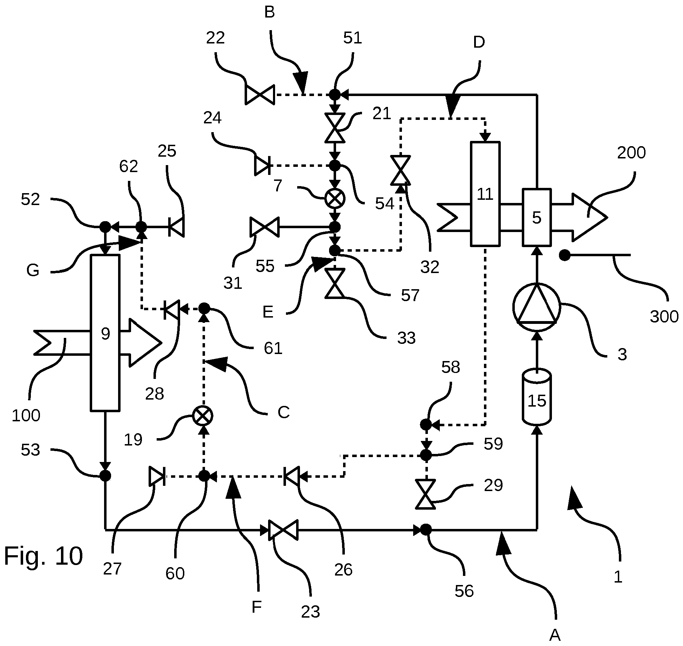

Cet autre mode de réalisation permet au dispositif de gestion thermique 1 de fonctionner dans un deuxième mode pompe à chaleur illustré à la figure 10 dans lequel l'évaporateur 11 et l'évapo/condenseur 9 fonctionnent en série.

Dans ce deuxième mode pompe à chaleur, le fluide réfrigérant passe tout d'abord par le compresseur 3 au niveau duquel il subit une augmentation de pression. Le fluide réfrigérant passe ensuite dans le condenseur interne 5 qui est traversé par le flux d'air interne 200. Pour cela le volet 300 est ouvert. Le fluide réfrigérant cède de l'énergie calorifique au flux d'air interne 200 et passe ensuite dans le premier dispositif de détente 7 au niveau duquel il subit une première perte de pression. Le fluide réfrigérant passe ensuite dans la troisième branche de dérivation D et passe dans l'évaporateur 11 au niveau duquel il récupère de l'énergie calorifique dans le flux d'air externe 200. Le fluide réfrigérant rejoint ensuite le deuxième dispositif de détente 19 sur la deuxième branche de dérivation C en passant pas la cinquième branche de dérivation F. Au niveau du deuxième dispositif de détente 17 le fluide réfrigérant subit une deuxième perte de pression. Le fluide réfrigérant passe ensuite par la sixième branche de dérivation G pour rejoindre et traverser l'évapo/condenseur 9 au niveau duquel il récupère de l'énergie calorifique dans le flux d'air externe 100. Le fluide réfrigérant retourne ensuite dans le compresseur 3.

Pour que ce trajet soit possible, le dispositif de redirection du fluide réfrigérant en provenance du condenseur interne 5 redirige le fluide réfrigérant vers le premier dispositif de détente 7. Pour cela, sa première vanne d'arrêt 21 est ouverte et sa deuxième vanne d'arrêt 22 est fermée.

Le dispositif de redirection du fluide réfrigérant en provenance du premier dispositif de détente 7 redirige quant à lui le fluide réfrigérant vers l'évaporateur 11. Pour cela, sa première 31 et sa troisième 33 vanne d'arrêt 31 sont fermées et sa deuxième vanne d'arrêt 32 est ouverte.

La vanne d'arrêt 23 est quant à elle ouverte.

Le dispositif de blocage 29 est quant à lui fermé.

Ce deuxième mode pompe à chaleur permet de réchauffer le flux d'air interne 200 et ainsi de chauffer l'habitacle du véhicule automobile alors que la température extérieure est négative. Le flux d'air interne 200 est alors en mode recyclage, c'est-à-dire que le dispositif de chauffage, ventilation et climatisation recycle l'air de l'habitacle pour générer le flux d'air interne 200.

Ainsi, on voit bien que part son architecture comportant un premier dispositif de détente 7 dont le fluide réfrigérant en sortie est redistribué par un dispositif de redirection dédié, le dispositif de gestion thermique inversible 1 nécessite moins d'éléments, notamment de dispositifs de détentes et donc est moins coûteux. Cela tout en permettant plusieurs modes de fonctionnement essentiels.

## Revendications

1. Dispositif de gestion thermique inversible (1) pour un véhicule automobile, ledit dispositif de gestion thermique (1) comportant un circuit de fluide réfrigérant dans lequel circule un fluide réfrigérant et comportant :
∘ une boucle principale (A) comportant successivement un compresseur (3), un condenseur interne (5), un premier dispositif de détente (7) et un évapo/condenseur externe (9),
∘ une première branche de dérivation (B) reliant un premier point de raccordement (51) disposé sur la boucle principale (A) en amont du premier dispositif de détente (7), entre ledit premier dispositif de détente (7) et le condenseur interne (5), à un deuxième point de raccordement (52) disposé sur la boucle principale (A) en amont de l'évapo/condenseur externe (9), entre ledit évapo/condenseur externe (9) et le premier dispositif de détente (7),
∘ une deuxième branche de dérivation (C) reliant un troisième point de raccordement (53) disposé sur la boucle principale (A) en aval de l'évapo/condenseur externe (9), entre ledit évapo/condenseur externe (9) et le compresseur (3), à un quatrième point de raccordement (54) disposé sur la boucle principale (A) en amont du premier dispositif de détente (7), entre ledit premier dispositif de détente (7) et le premier point de raccordement (51), où le dispositif de gestion thermique inversible (1) comporte :
∘ une troisième branche de dérivation (D) reliant un cinquième point de raccordement (55) disposé sur la boucle principale (A) en aval du premier dispositif de détente (7), entre ledit premier dispositif de détente (7) et le deuxième point de raccordement (52), à un sixième point de raccordement (56) disposé sur la boucle principale (A) en amont du compresseur (3), entre ledit compresseur (3) et le troisième point de raccordement (53), ladite troisième branche de dérivation (D) comportant au moins un échangeur de chaleur (11-13),
∘ un dispositif de redirection du fluide réfrigérant en provenance du condenseur interne (5) vers le premier dispositif de détente (7) ou vers la première branche de dérivation (B),
∘ une vanne d'arrêt (23) du fluide réfrigérant disposée sur la boucle principale (A) entre le troisième (53) et le sixième (56) point de raccordement,
∘ une première vanne antiretour (24) disposée sur la deuxième branche de dérivation (C) de sorte à bloquer le fluide réfrigérant en provenance du condenseur interne (5),
∘ une deuxième vanne antiretour (25) disposée sur la boucle principale (A) entre le deuxième (52) et le cinquième (55) point de raccordement de sorte à bloquer le fluide réfrigérant en provenance de l'évapo/condenseur (9),
∘ un dispositif de redirection du fluide réfrigérant en provenance du premier dispositif de détente (7) vers l'au moins un échangeur de chaleur (11-13) de la troisième branche de dérivation (D) ou vers l'évapo/condenseur (9).

2. Dispositif de gestion thermique inversible (1) selon la revendication précédente, où le dispositif de redirection du fluide réfrigérant en provenance du premier dispositif de détente (7) comporte :
∘ une première vanne d'arrêt (31) disposée sur la boucle principale (A) en amont de l'évapo/condenseur (9), entre le cinquième point de raccordement (55) et la deuxième vanne antiretour (25),
∘ au moins une autre vanne d'arrêt (32-33) disposée sur la troisième branche de dérivation (D) en amont de l'au moins un échangeur de chaleur (11-13), entre le cinquième point de raccordement (55) et l'au moins un échangeur de chaleur (11-13).

3. Dispositif de gestion thermique inversible (1) selon l'une quelconque des revendications précédentes, où la troisième branche de dérivation (D) comporte un évaporateur interne (11) et en ce que le dispositif de gestion thermique inversible (1) comporte une quatrième branche de dérivation (E) comportant un refroidisseur (15), ladite quatrième branche de dérivation (E) reliant un septième point de raccordement (57) disposé sur la troisième branche de dérivation (D) en aval du cinquième point de raccordement (55), entre ledit cinquième point de raccordement (55) et l'évaporateur interne (11), à un huitième point de raccordement (58) disposé sur la troisième branche de dérivation (D) en amont du sixième point de raccordement (56), entre ledit sixième point de raccordement (56) et l'évaporateur interne (11), le dispositif de redirection du fluide réfrigérant en provenance du premier dispositif de détente (7) étant configuré pour rediriger le fluide vers l'évapo/condenseur (9) ou vers l'évaporateur interne (11) et/ou le refroidisseur (15).

4. Dispositif de gestion thermique inversible (1) selon les revendications 2 et 3, où le dispositif de redirection du fluide réfrigérant en provenance du premier dispositif de détente (7) comporte :
∘ une deuxième vanne d'arrêt (32) disposée sur la troisième branche de dérivation (D) en amont de l'évaporateur interne (11), entre ledit évaporateur interne (11) et le septième point de raccordement (57), et
∘ une troisième vanne d'arrêt (33) disposée sur la quatrième branche de dérivation (E) en amont du refroidisseur (13), entre ledit refroidisseur (13) et le septième point de raccordement (57).

5. Dispositif de gestion thermique inversible (1) selon la revendication précédente, où il comporte un dispositif de chauffage, ventilation et climatisation à l'intérieur duquel est destiné à circuler un flux d'air interne (200) en direction de l'habitacle, l'évaporateur interne (11) et le condenseur interne (5) étant disposé dans ledit dispositif de chauffage, ventilation et climatisation, ledit évaporateur interne (11) étant disposé en amont du condenseur interne (5) dans le sens de circulation du flux d'air interne (200).

6. Dispositif de gestion thermique inversible (1) selon la revendication précédente, où le dispositif de chauffage, ventilation et climatisation comportent un volet (300) disposé de sorte à bloquer le flux d'air interne (200) pour qu'il ne traverse pas le condenseur interne (5).

7. Dispositif de gestion thermique inversible (1) selon l'une quelconque des revendications précédentes, où il comporte un échangeur de chaleur interne (17), ledit échangeur de chaleur interne (17) étant disposé d'une part sur la deuxième branche de dérivation (C) en aval de la première vanne antiretour (24), entre ladite première vanne antiretour (24) et le quatrième point de raccordement (54) et d'autre part sur la boucle principale (A) en amont du compresseur (3), entre ledit compresseur (3) et le sixième point de raccordement (56).

8. Dispositif de gestion thermique inversible (1) selon l'une quelconque des revendications précédentes, où le dispositif de redirection du fluide réfrigérant en provenance du premier dispositif de détente (7) est contrôlé via des signaux à modulation de largeur d'impulsion.

9. Dispositif de gestion thermique inversible (1) selon l'une quelconque des revendications précédentes, où il comporte un deuxième dispositif de détente (30) disposé sur la troisième branche de dérivation (D) en aval de l'au moins un échangeur de chaleur (11-13).

10. Dispositif de gestion thermique inversible (1) selon l'une quelconque des revendications précédentes, où il comporte en outre :
∘ un dispositif de blocage (29) du fluide réfrigérant disposé sur la troisième branche de dérivation (D) en aval de l' au moins un échangeur de chaleur (11-13),
∘ une cinquième branche de dérivation (F) reliant un neuvième point de raccordement (59) disposé sur la troisième branche de dérivation (D) entre le dispositif de blocage (29) et l'au moins un échangeur de chaleur (11-13), à un dixième point de raccordement (60) disposé sur la deuxième branche de raccordement (C) entre ladite première vanne antiretour (24) et le troisième point de raccordement (53), ladite cinquième branche de dérivation (F) comportant une troisième vanne antiretour (26) de sorte à bloquer le fluide réfrigérant en provenance du dixième point de raccordement (60),
∘ une quatrième vanne antiretour (27) disposée sur la deuxième branche de dérivation (C) entre le troisième (53) et le dixième (60) point de raccordement, de sorte à bloquer le fluide réfrigérant en provenance du dixième point de raccordement (60),
∘ une sixième branche de dérivation (G) reliant un onzième point de raccordement (61) disposé sur la deuxième branche de dérivation (C) entre le dixième point de raccordement (60) et la première vanne antiretour (24), à un douzième point de raccordement (62) disposé sur la boucle principale (A) en aval de la deuxième vanne antiretour (25), entre ladite deuxième vanne antiretour (25) et le deuxième point de raccordement (52), ladite sixième branche de dérivation (G) comportant une cinquième vanne antiretour (28) de sorte à bloquer le fluide réfrigérant en provenance du douzième point de raccordement (62),
∘ un troisième dispositif de détente (19) disposé sur la deuxième branche de dérivation (C) entre le dixième (60) et le onzième (61) point de raccordement.

## Patentansprüche

1. Umkehrbare Wärmemanagementvorrichtung (1) für ein Kraftfahrzeug, wobei die Wärmemanagementvorrichtung (1) einen Kühlfluidkreis aufweist, in dem ein Kühlfluid zirkuliert und der Folgendes aufweist:
- eine Hauptschleife (A), die nacheinander einen Kompressor (3), einen inneren Kondensator (5), eine erste Expansionsvorrichtung (7) und einen äußeren Verdampfer-Kondensator (9) aufweist,
- einen ersten Nebenzweig (B), der einen ersten Anschlusspunkt (51), der auf der Hauptschleife (A) stromauf der ersten Expansionsvorrichtung (7) zwischen der ersten Expansionsvorrichtung (7) und dem inneren Kondensator (5) angeordnet ist, mit einem zweiten Anschlusspunkt (52) verbindet, der auf der Hauptschleife (A) stromauf des äußeren Verdampfer-Kondensators (9) zwischen dem Verdampfer-Kondensator (9) und der ersten Expansionsvorrichtung (7) angeordnet ist,
- einen zweiten Nebenzweig (C), der einen dritten Anschlusspunkt (53), der auf der Hauptschleife (A) stromab des äußeren Verdampfer-Kondensators (9) zwischen dem äußeren Verdampfer-Kondensator (9) und dem Kompressor (3) angeordnet ist, mit einem vierten Anschlusspunkt (54) verbindet, der auf der Hauptschleife (A) stromauf der ersten Expansionsvorrichtung (7) zwischen der ersten Expansionsvorrichtung (7) und dem ersten Anschlusspunkt (51) angeordnet ist,
wobei die umkehrbare Wärmemanagementvorrichtung (1) Folgendes aufweist:
- einen dritten Nebenzweig (D), der einen fünften Anschlusspunkt (55), der auf der Hauptschleife (A) stromab der ersten Expansionsvorrichtung (7) zwischen der ersten Expansionsvorrichtung (7) und dem zweiten Anschlusspunkt (52) angeordnet ist, mit einem sechsten Anschlusspunkt (56) verbindet, der auf der Hauptschleife (A) stromauf des Kompressors (3) zwischen dem Kompressor (3) und dem dritten Anschlusspunkt (53) angeordnet ist, wobei der dritte Nebenzweig (D) wenigstens einen Wärmetauscher (11-13) aufweist,
- eine Vorrichtung zur Weiterleitung des vom inneren Kondensator (5) kommenden Kühlfluids zur ersten Expansionsvorrichtung (7) oder zum ersten Nebenzweig (B),
- ein Absperrventil (23) für das Kühlfluid, das auf der Hauptschleife (A) zwischen dem dritten (53) und dem sechsten (56) Anschlusspunkt angeordnet ist,
- ein erstes Rückschlagventil (24), das auf dem zweiten Nebenzweig (C) angeordnet ist, um das vom inneren Kondensator (5) kommende Kühlfluid zu blockieren,
- ein zweites Rückschlagventil (25), das auf der Hauptschleife (A) zwischen dem zweiten (52) und dem fünften (55) Anschlusspunkt angeordnet ist, um das vom Verdampfer-Kondensator (9) kommende Kühlfluid zu blockieren,
- eine Vorrichtung zur Weiterleitung des von der ersten Expansionsvorrichtung (7) kommenden Kühlfluids zu dem wenigstens einen Wärmetauscher (11-13) des dritten Nebenzweigs (D) oder zum Verdampfer-Kondensator (9).

2. Umkehrbare Wärmemanagementvorrichtung (1) nach dem vorhergehenden Anspruch, wobei die Vorrichtung zur Weiterleitung des von der ersten Expansionsvorrichtung (7) kommenden Kühlfluids Folgendes aufweist:
- ein erstes Absperrventil (31), das auf der Hauptschleife (A) stromauf des Verdampfer-Kondensators (9) zwischen dem fünften Anschlusspunkt (55) und dem zweiten Rückschlagventil (25) angeordnet ist,
- wenigstens ein anderes Absperrventil (32-33), das auf dem dritten Nebenzweig (D) stromauf des wenigstens einen Wärmetauschers (11-13) zwischen dem fünften Anschlusspunkt (55) und dem wenigstens einen Wärmetauscher (11-13) angeordnet ist.

3. Umkehrbare Wärmemanagementvorrichtung (1) nach einem der vorhergehenden Ansprüche, wobei der dritte Nebenzweig (D) einen inneren Verdampfer (11) aufweist, und dadurch, dass die umkehrbare Wärmemanagementvorrichtung (1) einen vierten Nebenzweig (E) aufweist, der einen Kühler (15) aufweist, wobei der vierte Nebenzweig (E) einen siebten Anschlusspunkt (57), der auf dem dritten Nebenzweig (D) stromab des fünften Anschlusspunkts (55) zwischen dem fünften Anschlusspunkt (55) und dem inneren Verdampfer (11) angeordnet ist, mit einem achten Anschlusspunkt (58) verbindet, der auf dem dritten Nebenzweig (D) stromauf des sechsten Anschlusspunkts (56) zwischen dem sechsten Anschlusspunkt (56) und dem inneren Verdampfer (11) angeordnet ist, wobei die Vorrichtung zur Weiterleitung des von der ersten Expansionsvorrichtung (7) kommenden Kühlfluids dazu ausgebildet ist, das Fluid zum Verdampfer-Kondensator (9) oder zum inneren Verdampfer (11) und/oder zum Kühler (15) weiterzuleiten.

4. Umkehrbare Wärmemanagementvorrichtung (1) nach den Ansprüchen 2 und 3, wobei die Vorrichtung zur Weiterleitung des von der ersten Expansionsvorrichtung (7) kommenden Kühlfluids Folgendes aufweist:
- ein zweites Absperrventil (32), das auf dem dritten Nebenzweig (D) stromauf des inneren Verdampfers (11) zwischen dem inneren Verdampfer (11) und dem siebten Anschlusspunkt (57) angeordnet ist, und
- ein drittes Absperrventil (33), das auf dem vierten Nebenzweig (E) stromauf des Kühlers (13) zwischen dem Kühler (13) und dem siebten Anschlusspunkt (57) angeordnet ist.

5. Umkehrbare Wärmemanagementvorrichtung (1) nach dem vorhergehenden Anspruch, wobei sie eine Heizungs-, Lüftungs- und Klimatisierungsvorrichtung aufweist, in der ein innerer Luftstrom (200) in Richtung des Fahrzeuginnenraums zirkulieren soll, wobei der innere Verdampfer (11) und der innere Kondensator (5) in der Heizungs-, Lüftungs- und Klimatisierungsvorrichtung angeordnet sind, wobei der innere Verdampfer (11) stromauf des inneren Kondensators (5) in der Zirkulationsrichtung des inneren Luftstroms (200) angeordnet ist.

6. Umkehrbare Wärmemanagementvorrichtung (1) nach dem vorhergehenden Anspruch, wobei die Heizungs-, Lüftungs- und Klimatisierungsvorrichtung eine Klappe (300) aufweist, die so angeordnet ist, dass sie den inneren Luftstrom (200) blockiert, damit er den inneren Kondensator (5) nicht durchströmt.

7. Umkehrbare Wärmemanagementvorrichtung (1) nach einem der vorhergehenden Ansprüche, wobei sie einen inneren Wärmetauscher (17) aufweist, wobei der innere Wärmetauscher (17) einerseits auf dem zweiten Nebenzweig (C) stromab des ersten Rückschlagventils (24) zwischen dem ersten Rückschlagventil (24) und dem vierten Anschlusspunkt (54) und andererseits auf der Hauptschleife (A) stromauf des Kompressors (3) zwischen dem Kompressor (3) und dem sechsten Anschlusspunkt (56) angeordnet ist.

8. Umkehrbare Wärmemanagementvorrichtung (1) nach einem der vorhergehenden Ansprüche, wobei die Vorrichtung zur Weiterleitung des von der ersten Expansionsvorrichtung (7) kommenden Kühlfluids über Pulsweitenmodulationssignale gesteuert wird.

9. Umkehrbare Wärmemanagementvorrichtung (1) nach einem der vorhergehenden Ansprüche, wobei sie eine zweite Expansionsvorrichtung (30) aufweist, die auf dem dritten Nebenzweig (D) stromab des wenigstens einen Wärmetauschers (11-13) angeordnet ist.

10. Umkehrbare Wärmemanagementvorrichtung (1) nach einem der vorhergehenden Ansprüche, wobei sie ferner Folgendes aufweist:
- eine Vorrichtung zum Blockieren (29) des Kühlfluids, die auf dem dritten Nebenzweig (D) stromab des wenigstens einen Wärmetauschers (11-13) angeordnet ist,
- einen fünften Nebenzweig (F), der einen neunten Anschlusspunkt (59), der auf dem dritten Nebenzweig (D) zwischen der Blockiervorrichtung (29) und dem wenigstens einen Wärmetauscher (11-13) angeordnet ist, mit einem zehnten Anschlusspunkt (60) verbindet, der auf dem zweiten Verbindungszweig (C) zwischen dem ersten Rückschlagventil (24) und dem dritten Anschlusspunkt (53) angeordnet ist, wobei der fünfte Nebenzweig (F) ein drittes Rückschlagventil (26) aufweist, um das vom zehnten Anschlusspunkt kommende Kühlfluid (60) zu blockieren,
- ein viertes Rückschlagventil (27), das auf dem zweiten Nebenzweig (C) zwischen dem dritten (53) und dem zehnten (60) Anschlusspunkt angeordnet ist, um das vom zehnten Anschlusspunkt (60) kommende Kühlfluid zu blockieren,
- einen sechsten Nebenzweig (G), der einen elften Anschlusspunkt (61), der auf dem zweiten Nebenzweig (C) zwischen dem zehnten Anschlusspunkt (60) und dem ersten Rückschlagventil (24) angeordnet ist, mit einem zwölften Anschlusspunkt (62) verbindet, der auf der Hauptschleife (A) stromab des zweiten Rückschlagventils (25) zwischen dem zweiten Rückschlagventil (25) und dem zweiten Anschlusspunkt (52) angeordnet ist, wobei sechste Nebenzweig (G) ein fünftes Rückschlagventil (28) aufweist, um das vom zwölften Anschlusspunkt (62) kommende Kühlfluid zu blockieren,
- eine dritte Expansionsvorrichtung (19), die auf dem zweiten Nebenzweig (C) zwischen dem zehnten (60) und dem elften (61) Anschlusspunkt angeordnet ist.

## Claims

1. Reversible thermal management device (1) for a motor vehicle, said thermal management device (1) having a refrigerant fluid circuit in which a refrigerant fluid circulates, and comprising:
- a main loop (A) which comprises successively a compressor (3), an internal condenser (5), a first expansion device (7) and an external evaporator/condenser (9),
- a first bypass branch (B) connecting a first connection point (51) arranged on the main loop (A) upstream of the first expansion device (7), between said first expansion device (7) and the internal condenser (5), to a second connection point (52) arranged on the main loop (A) upstream of the external evaporator/condenser (9), between said external evaporator/condenser (9) and the first expansion device (7),
- a second bypass branch (C) connecting a third connection point (53) arranged on the main loop (A) downstream of the external evaporator/condenser (9), between said external evaporator/condenser (9) and the compressor (3), to a fourth connection point (54) arranged on the main loop (A) upstream of the first expansion device (7), between said first expansion device (7) and the first connection point (51),
in which the reversible thermal management device (1) comprises:
- a third bypass branch (D) connecting a fifth connection point (55) arranged on the main loop (A) downstream of the first expansion device (7), between said first expansion device (7) and the second connection point (52), to a sixth connection point (56) arranged on the main loop (A) upstream of the compressor (3), between said compressor (3) and the third connection point (53), said third bypass branch (D) comprising at least one heat exchanger (11-13),
- a device for redirecting the refrigerant fluid coming from the internal condenser (5) towards the first expansion device (7) or towards the first bypass branch (B),
- a stop valve (23) for the refrigerant fluid, arranged on the main loop (A) between the third (53) and the sixth (56) connection points,
- a first check valve (24) arranged on the second bypass branch (C) so as to block the refrigerant fluid coming from the internal condenser (5),
- a second check valve (25) arranged on the main loop (A) between the second (52) and the fifth (55) connection points, so as to block the refrigerant fluid coming from the evaporator/condenser (9),
- a device for redirecting the refrigerant fluid coming from the first expansion device (7) towards the at least one heat exchanger (11-13) of the third bypass branch (D) or towards the evaporator/condenser (9).

2. Reversible thermal management device (1) according to the preceding claim, in which the device for redirecting the refrigerant fluid coming from the first expansion device (7) comprises:
- a first stop valve (31) arranged on the main loop (A) upstream of the evaporator/condenser (9), between the fifth connection point (55) and the second check valve (25),
- at least one other stop valve (32-33) arranged on the third bypass branch (D) upstream of the at least one heat exchanger (11-13), between the fifth connection point (55) and the at least one heat exchanger (11-13).

3. Reversible thermal management device (1) according to any of the preceding claims, in which the third bypass branch (D) comprises an internal evaporator (11), and in that the reversible thermal management device (1) comprises a fourth bypass branch (E) containing a cooler (15), said fourth bypass branch (E) connecting a seventh connection point (57) arranged on the third bypass branch (D) downstream of the fifth connection point (55), between said fifth connection point (55) and the internal evaporator (11), to an eighth connection point (58) arranged on the third bypass branch (D) upstream of the sixth connection point (56), between said sixth connection point (56) and the internal evaporator (11), the device for redirecting refrigerant fluid coming from the first expansion device (7) being configured to redirect the fluid towards the evaporator/condenser (9) or towards the internal evaporator (11) and/or the cooler (15).

4. Reversible thermal management device (1) according to Claims 2 and 3, in which the device for redirecting the refrigerant fluid coming from the first expansion device (7) comprises:
- a second stop valve (32) arranged on the third bypass branch (D) upstream of the internal evaporator (11), between said internal evaporator (11) and the seventh connection point (57), and
- a third stop valve (33) arranged on the fourth bypass branch (E) upstream of the cooler (13), between said cooler (13) and the seventh connection point (57).

5. Reversible thermal management device (1) according to the preceding claim, in which it comprises a heating, ventilation and air conditioning device inside which an internal air flow (200) is designed to circulate in the direction of the passenger compartment, the internal evaporator (11) and the internal condenser (5) being arranged in said heating, ventilation and air conditioning device, said internal evaporator (11) being arranged upstream of the internal condenser (5) in the circulation direction of the internal air flow (200) .

6. Reversible thermal management device (1) according to the preceding claim, in which the heating, ventilation and air conditioning device comprises a flap (300) arranged so as to block the internal air flow (200) so that it does not pass through the internal condenser (5).

7. Reversible thermal management device (1) according to any of the preceding claims, in which it comprises an internal heat exchanger (17), said internal heat exchanger (17) being arranged firstly on the second bypass branch (C) downstream of the first check valve (24), between said first check valve (24) and the fourth connection point (54), and secondly on the main loop (A) upstream of the compressor (3), between said compressor (3) and the sixth connection point (56).

8. Reversible thermal management device (1) according to any of the preceding claims, in which the device for redirecting the refrigerant fluid coming from the first expansion device (7) is controlled via pulse width modulation signals.

9. Reversible thermal management device (1) according to any of the preceding claims, in which it comprises a second expansion device (30) arranged on the third bypass branch (D) downstream of the at least one heat exchanger (11-13).

10. Reversible thermal management device (1) according to any of the preceding claims, in which it also comprises:
- a device (29) for blocking the refrigerant fluid, arranged on the third bypass branch (D) downstream of the at least one heat exchanger (11-13),
- a fifth bypass branch (F) connecting a ninth connection point (59) arranged on the third bypass branch (D) between the blocking device (29) and the at least one heat exchanger (11-13), to a tenth connection point (60) arranged on the second connection branch (C) between said first check valve (24) and the third connection point (53), said fifth bypass branch (F) comprising a third check valve (26) so as to block the refrigerant fluid coming from the tenth connection point (60),
- a fourth check valve (27) arranged on the second bypass branch (C) between the third (53) and the tenth (60) connection points, so as to block the refrigerant fluid coming from the tenth connection point (60),
- a sixth bypass branch (G) connecting an eleventh connection point (61) arranged on the second bypass branch (C) between the tenth connection point (60) and the first check valve (24), to a twelfth connection point (62) arranged on the main loop (A) downstream of the second check valve (25), between said second check valve (25) and the second connection point (52), said sixth bypass branch (G) comprising a fifth check valve (28) so as to block the refrigerant fluid coming from the twelfth connection point (62),
- a third expansion device (19) arranged on the second bypass branch (C) between the tenth (60) and eleventh (61) connection points.
